# EUROPEAN PATENT SPECIFICATION

(11) **EP 2 722 295 B1**
(45) Date of publication and mention of the grant of the patent: **04.05.2016**
(21) Application number: 12188793.9
(22) Date of filing: 17.10.2012
(51) Int. Cl.: B65G 17/08, B65G 47/64, B65G 47/71

(54) **Divider conveyor**
Weichenförderer
Transporteur aiguilleur

(43) Date of publication of application: 23.04.2014
(73) Proprietor: Logi Concept Engineering B.V., 7156 LM Beltrum (NL)
(72) Inventor: Brinkers, Joep Hendrik, 7151 CG Eibergen (NL)
(74) Representative: 't Jong, Bastiaan Jacob

(56) References cited:
- EP-A1- 0 820 943
- EP-A1- 1 818 293
- DE-A1-102006 014 182
- GB-A- 2 482 585

## Description

The invention relates to a divider conveyor comprising an endless belt of parallel interconnected elements arranged around at least two opposite end rollers, wherein the two opposite end rollers are axially displaceable relative to each other. Such a divider conveyor is known from EP 1818293 A1.

Divider conveyors are used to split a conveyor belt into at least two separate tracks. This enables one to move a product path on the fly from one destination conveyor belt to a second conveyor belt.

A known embodiment uses a wide conveyor track on which elements are guided. These elements can be displaced side ways on the conveyor track, such that the support surface of the wide conveyor track is displaced in a desired direction. The elements are at the bottom provided with a guide pin, which runs along a guide track underneath the wide conveyor track.

An advantage of such a construction is the even force distribution on the wide conveyor track. A disadvantage is however the complex construction and the width of the conveyor track.

Another known embodiment is a divider conveyor with an endless belt running around two end rollers, wherein the two end rollers can be displaced axially relative to each other. The displacement of the rollers is possible because of the axial play between the conveyor belt links.

When the end rollers are not inline with each other, the endless belt will endure uneven stresses. These uneven stresses will try to force the belt back to a straight line, which could result in the endless belt running from the end rollers. To prevent the belt from running from the end rollers a side guide can be provided. However do to the displaced links, the side of the conveyor belt is irregular, causing irregular load on to the side guide, which results in noise and excessive wear.

It is an object of the invention to provide a divider conveyor, in which the above mentioned disadvantages are reduced or even removed.

This object is achieved with a divider conveyor according to claim 1.

With the divider conveyor according to the invention, the sides of each element of the belt are angled, such that when these sides get into contact with the at least one guide in one of the two end positions, the guide and the sides are parallel. As a result, the load is distributed evenly over the length of the sides and the guide. This ensures a lower noise production compared to the above mentioned prior art and a longer time of life of the belt.

In a preferred embodiment of the divider conveyor according to the invention, the at least one side guide comprises a row of bearings. The bearings reduce the friction caused by the contact of the sides of the elements with the guide. Due to the reduction in friction, the overall tension in the conveyor will be reduced.

In another embodiment of the divider conveyor according to the invention the elements of the endless belt each have a plurality of protrusions extending on either side of a central axis, wherein each protrusion has at least an opening in line with openings of adjacent protrusions extending on the same side of the central axis.

With such elements a flat conveyor surface is achieved, while the elements of the conveyor belt can also shift axially relative to each other.

Preferably, the spacing between adjacent protrusions is larger than the width of a protrusion of an adjacent intermeshing element, such that adjacent elements can shift relative to each other.

Yet another embodiment of the divider conveyor according to the invention comprises two side guides arranged on either side of the endless belt.

By arranging two side guides on either side, the divider conveyor can be angled from a center position to both the left side as well as to the right side. In such an embodiment, the divider conveyor could transport products to three positions, i.e. left, center and right.

Preferably both side guides are arranged under an angle relative to the axis of the rollers and wherein both outer ends of the elements are angled parallel to the adjacent side guide.

In still another embodiment the at least one side guide is hingedly arranged between the two end rollers. When the end rollers are axially displaced relative to each other the at least one side guide moves along and is angled parallel to the conveyor belt.

In yet another embodiment of the divider conveyor according to the invention the width-length ratio of the endless belt is between 1:2 and 1:9.

With this ratio an optimal balance is obtained between the length of the divider conveyor, the width of the elements and the forces in the belt when the divider conveyor is angled against the side guide.

In yet another embodiment of the divider conveyor according to the invention the width of the interconnected elements is less than 25.4mm (1 inch), preferably about 10mm. With such small elements a small radius at the end rollers is obtained. This so-called nose of the belt is then flat, which facilitates easy transfer of products from the divider conveyor to a next conveyor belt.

These and other features of the invention will be elucidated in conjunction with the accompanying drawings.
Figure 1 shows a schematic view of an embodiment of the divider conveyor according to the invention.
Figure 2 shows a more close detail of the elements of the conveyor according to figure 1.
Figure 3 shows a even more close detail of the elements of figure 2.
Figure 4 shows a side view of the conveyor of figure 1.

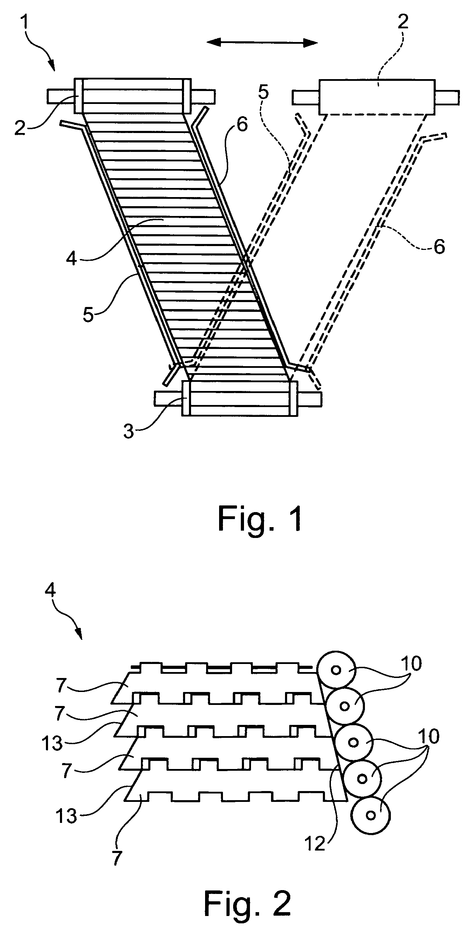

Figure 1 shows a schematic view of a divider conveyor 1. This divider conveyor 1 has two end rollers 2, 3 which guide an endless belt 4.

The end roller 2 can be displaced axially and parallel to the end roller 3, such that the endless belt 4 is either angled to the left (as shown) or angled to the right (as shown with dotted lines).

Two side guides 5, 6 are arranged on either side of the belt 4, such that the side guides 5, 6 can support the endless belt 4 in either the left position or the right position. These side guides 5, 6 will typically move along with the endless belt 4, when this is brought to either the left or the right position.

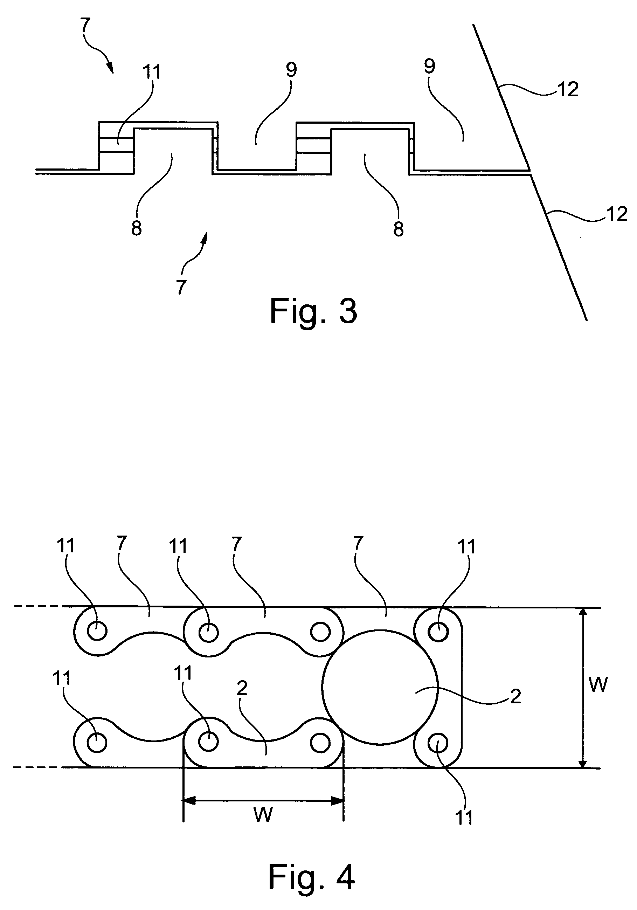

Figure 2 shows the endless belt 4 in more detail. The endless belt 4 has elements 7, which each have a plurality of protrusions 8, 9 (see also figure 3) extending on either side of the central axis of an element 7.

Because the spacing of the protrusions 8, 9 is larger than the width of the protrusions 8, 9, it is possible to shift the elements 7 relative to each other, such that the belt 4 can be angled to the left or to the right.

Figure 2 also shows the right side guide 6 in more detail. The side guide 6 comprises a row of bearings 10, which will guide the elements 7 while keeping the friction low.

Figure 3 shows the elements 7 in even more detail. The elements 7 are connected by rods 11, which extend through the protrusions 8, 9.

It is clear from figure 2 and figure 3, that the elements 7 have angled sides 12, 13, which correspond to the angle of the side guides 5, 6. Because of the angled sides 12, 13 a flat side surface for the endless belt 4 will be generated when the belt is either in the left angled position or the right angled position.

Figure 4 shows a side view of the conveyor 1 of figure 1. By having the width w of the elements 7 small, it is also possible to have a small diameter for the end roller 2, such that a small nose of the endless belt 4 is obtained. This is of advantage when products are transferred from the divider conveyor 1 onto an adjacent conveyor belt.

## Claims

1. Divider conveyor (1) comprising an endless belt (4) of parallel interconnected elements (7) arranged around at least two opposite end rollers (2, 3), wherein the two opposite end rollers (2, 3) are axially displaceable relative to each other between two end positions
**characterized by**
at least one side guide (5, 6) for guiding the interconnected elements (7) between the two rollers (2, 3), wherein the at least one side guide (5, 6) is arranged under an angle relative to the axis of the rollers (2, 3),
wherein the sides (12, 13), adjacent the at least one side guide (5, 6), of the interconnected elements (7) are angled parallel to the at least one guide (5, 6) in one of the two end positions.

2. Divider convey or (1) according to claim 1, wherein the at least one side guide (5, 6) comprises a row of bearings (10).

3. Divider conveyor (1) according to claim 1 or 2, wherein the elements (7) of the endless belt (4) each have a plurality of protrusions (8, 9) extending on either side of a central axis, wherein each protrusion (8, 9) has at least an opening in line with openings of adjacent protrusions (8, 9) extending on the same side of the central axis.

4. Divider conveyor (1) according to claim 3, wherein the spacing between adjacent protrusions (8, 9) is larger than the width of a protrusion (8, 9) of an adjacent intermeshing element (7), such that adjacent elements (7) can shift relative to each other.

5. Divider conveyor (1) according to any of the preceding claims comprising two side guides (5, 6) arranged on either side (12, 13) of the endless belt (4).

6. Divider conveyor (1) according to claim 5, wherein both side guides (5, 6) are arranged under an angle relative to the axis of the rollers (2, 3) and wherein both outer ends (12, 13) of the elements (7) are angled parallel to the adjacent side guide (5, 6).

7. Divider conveyor (1) according to any of the preceding claims, wherein the at least one side guide (5, 6) is hingedly arranged between the two end rollers (2, 3).

8. Divider conveyor (1) according to any of the preceding claims, wherein the width-length ratio of the endless belt (4) is between 1:4 and 1:6.

9. Divider conveyor (1) according to any of the preceding claims, wherein the width of the interconnected elements (7) is less than 15mm, preferably about 10mm.

## Patentansprüche

1. Weichenförderer (1), der ein endloses Band (4) von parallel verbundenen Elementen (7) aufweist, das um zumindest zwei gegenüberliegende Endrollen (2,3) herum angeordnet ist, wobei die zwei gegenüberliegenden Endrollen (2, 3) relativ zueinander zwischen zwei Endpositionen axial verschiebbar sind, **gekennzeichnet durch**
zumindest eine Seitenführung (5, 6) zum Führen der verbundenen Elemente (7) zwischen den zwei Rollern (2, 3), wobei die zumindest eine Seitenführung (5, 6) unter einem Winkel relativ zu der Achse der Rollen (2, 3) angeordnet ist,
wobei die Seiten (12, 13), neben der zumindest einen Seitenführung (5, 6), von den verbundenen Elementen (7) in einer der zwei Endpositionen parallel zu der zumindest einen Führung (5, 6) abgewinkelt sind.

2. Weichenförderer (1) gemäß Anspruch 1, wobei die zumindest eine Seitenführung (5, 6) eine Reihe von Lagern (10) aufweist.

3. Weichenförderer (1) gemäß Anspruch 1 oder 2, wobei die Elemente (7) des endlosen Bandes (4) jeweils eine Vielzahl von Vorsprüngen (8, 9) haben, die sich auf beiden Seiten einer zentralen Achse erstrecken, wobei jeder Vorsprung (8, 9) zumindest eine Öffnung hat, die in Übereinstimmung mit Öffnungen von benachbarten Vorsprüngen (8, 9) ist, die sich auf der selben Seite der zentralen Achse erstrecken.

4. Weichenförderer (1) gemäß Anspruch 3, wobei der Abstand zwischen benachbarten Vorsprüngen (8, 9) größer als die Breite eines Vorsprungs (8, 9) eines benachbarten ineinandergreifenden Elementes (7) ist, so dass benachbarte Elemente (7) sich relativ zueinander verschieben können.

5. Weichenförderer (1) gemäß einem der vorangegangenen Ansprüche, der zwei Seitenführungen (5, 6) aufweist, die auf beiden Seiten (12, 13) des endlosen Bandes (4) angeordnet sind.

6. Weichenförderer (1) gemäß Anspruch 5, wobei beide Seitenführungen (5, 6) unter einem Winkel relativ zu der Achse der Rollen (2, 3) angeordnet sind und wobei beide äußeren Enden (12, 13) der Elemente (7) parallel zu der benachbarten Seitenführung (5, 6) abgewinkelt sind.

7. Weichenförderer (1) gemäß einem der vorangegangenen Ansprüche, wobei die zumindest eine Seitenführung (5, 6) zwischen den zwei Endrollen (2, 3) gelenkig gelagert ist.

8. Weichenförderer (1) gemäß einem der vorangegangenen Ansprüche, wobei das Breite-Länge-Verhältnis des endlosen Bandes (4) zwischen 1:4 und 1:6 ist.

9. Weichenförderer (1) gemäß einem der vorangegangenen Ansprüche, wobei die Breite der verbundenen Elemente (7) geringer als 15 mm, bevorzugt etwa 10 mm, ist.

## Revendications

1. Convoyeur séparateur (1) comprenant une courroie sans fin (4) d'éléments parallèles interconnectés (7) agencés autour d'au moins deux rouleaux d'extrémité opposés (2, 3), dans lequel les deux rouleaux d'extrémité opposés (2, 3) peuvent être déplacés de façon axiale l'un par rapport à l'autre entre deux positions d'extrémité
**caractérisé par**
au moins un guide latéral (5, 6) pour guider les éléments interconnectés (7) entre les deux rouleaux (2, 3), dans lequel l'au moins un guide latéral (5, 6) est agencé sous un certain angle par rapport à l'axe des rouleaux (2, 3),
dans lequel les côtés (12, 13), adjacents à l'au moins un guide latéral (5, 6), des éléments interconnectés (7) sont inclinés parallèlement à l'au moins un guide (5, 6) dans une des deux positions d'extrémité.

2. Convoyeur séparateur (1) selon la revendication 1, dans lequel l'au moins un guide latéral (5, 6) comprend une rangée de paliers (10).

3. Convoyeur séparateur (1) selon la revendication 1 ou 2, dans lequel les éléments (7) de la courroie sans fin (4) ont chacun une pluralité de protubérances (8, 9) s'étendant de chaque côté d'un axe central, dans lequel chaque protubérance (8, 9) a au moins une ouverture alignée sur des ouvertures de protubérances adjacentes (8, 9) s'étendant du même côté de l'axe central.

4. Convoyeur séparateur (1) selon la revendication 3, dans lequel l'espacement entre des protubérances adjacentes (8, 9) est plus grand que la largeur d'une protubérance (8, 9) d'un élément engrenant adjacent (7), de sorte que des éléments adjacents (7) peuvent se décaler les uns par rapport aux autres.

5. Convoyeur séparateur (1) selon n'importe laquelle des revendications précédentes, comprenant deux guides latéraux (5, 6) agencés de chaque côté (12, 13) de la courroie sans fin (4).

6. Convoyeur séparateur (1) selon la revendication 5, dans lequel les deux guides latéraux (5, 6) sont agencés sous un certain angle par rapport à l'axe des rouleaux (2, 3) et dans lequel les deux extrémités extérieures (12, 13) des éléments (7) sont inclinées parallèlement au guide latéral adjacent (5, 6).

7. Convoyeur séparateur (1) selon n'importe laquelle des revendications précédentes, dans lequel l'au moins un guide latéral (5, 6) est agencé par articulation entre les deux rouleaux d'extrémité (2, 3).

8. Convoyeur séparateur (1) selon n'importe laquelle des revendications précédentes, dans lequel le rapport largeur-longueur de la courroie sans fin (4) est entre 1:4 et 1:6.

9. Convoyeur séparateur (1) selon n'importe laquelle des revendications précédentes, dans lequel la largeur des éléments interconnectés (7) est inférieure à 15 mm, de préférence environ 10 mm.
